# EUROPÄISCHE PATENTSCHRIFT

(11) **EP 3 263 251 B1**
(45) Veröffentlichungstag und Bekanntmachung des Hinweises auf die Patenterteilung: **11.01.2023**
(21) Anmeldenummer: 17171387.8
(22) Anmeldetag: 16.05.2017
(51) Int. Cl.: B23B 31/20

(54) **SPANNZANGE, SPANNMUTTER, UND SPANNZANGENFUTTER MIT SPEZIELLER INTERAKTION ZWISCHEN DER SPANNZANGE UND DER SPANNMUTTER**
COLLET, CLAMPING NUT, AND COLLET CHUCK HAVING SPECIAL INTERACTION BETWEEN THE COLLET AND THE CLAMPING NUT
MANCHON DE SERRAGE, ÉCROU DE SERRAGE, ET MANDRIN DE SERRAGE À PINCE AYANT UNE INTERACTION SPÉCIFIQUE ENTRE LE MANCHON DE SERRAGE ET L'ÉCROU DE SERRAGE

(30) Priorität: 01.06.2016 DE 102016110087
(43) Veröffentlichungstag der Anmeldung: 03.01.2018
(73) Patentinhaber: Haimer GmbH, 86568 Hollenbach-Igenhausen (DE)
(72) Erfinder: Haimer, Franz, 86568 Hollenbach-Igenhausen (DE); Kirmayer, Lothar, 84166 Adlkofen (DE)
(74) Vertreter: Misselhorn, Hein-Martin

(56) Entgegenhaltungen:
- DE-A1- 1 477 757
- DE-A1- 2 013 229
- DE-C- 867 340
- US-A- 2 449 887
- US-A- 3 353 833

## Beschreibung

### Die Gattung der Erfindung

Die Erfindung betrifft ein Spannzangenfutter nach dem Oberbegriff des Anspruchs 1, eine Spannzange nach dem Oberbegriff des Anspruchs 12, und eine Spannmutter nach dem Oberbegriff des Anspruchs 13.

### Stand der Technik

Spannzangenfutter sind im Stand der Technik in den unterschiedlichsten Ausführungsformen bekannt.

Um einen Werkzeugschaft mittels eines solchen Spannzangenfutters im Presssitz zu halten, wird zunächst eine passende Spannzange in den Futterkörper eingesetzt, deren Werkzeugaufnahme den zum Durchmesser des Werkzeugschafts passenden Innendurchmesser besitzt.

Die Spannzange besitzt an ihrem Außenumfang einen Außenkonus und wird in eine Spannzangenaufnahme des Futterkörpers eingesetzt, die einen komplementären Innenkonus aufweist.

Sodann wird die Spannzange meist mithilfe einer als Überwurfmutter ausgestalteten Spannmutter in den Futterkörper eingetrieben. Die Spannmutter wird zu diesem Zweck mit ihrem Innengewinde auf ein entsprechendes Außengewinde des Futterkörpers aufgeschraubt. Sie kommt dabei im Bereich ihrer zentralen Öffnung gegen den Kragen der Spannzange zur Anlage und übt dadurch Druck auf die Spannzange aus.

Die Zentrierung und genaue Positionierung der Spannzange wird dabei im Wesentlichen über das Zusammenspiel des Außenkonus der Spannzange und des Innenkonus des Werkzeugspannfutters erreicht. Zusätzlich sind die einander berührenden Kontaktflächen der Spannmutter und des Kragens der Spannzange meist noch konisch gestaltet, um auch an dieser Stelle eine gewisse Zentrierwirkung zu erreichen. Es zeigt sich allerdings, dass dieses durch starke Reibung beim Anziehen der Spannmutter geprägte Zusammenspiel zwischen der Spannmutter und der Spannzange Schwierigkeiten bereitet, wenn reproduzierbar eine hervorragende Rundlaufgenauigkeit erreicht werden soll.

Um eine besser reproduzierbare Rundlaufgenauigkeit zu erreichen, sind auch schon Spannzangenfutter vorgeschlagen worden, bei denen die Spannmutter über ein Wälzlager auf die Spannzange einwirkt, so dass beim Anziehen der Spannmutter keine einen negativen Einfluss ausübenden Gleitreibungskräfte mehr zwischen der Spannmutter und der Spanzange auftreten.

Nachteilig an diesen Spannzangenfuttern ist, dass die Spannzange und die Spannmutter meist jeweils eine Einheit bilden, so dass die Spannzange und die Spannmutter im Zuge des Werkzeugwechsels nicht mit vertretbarem Aufwand voneinander getrennt werden können. Um eine Spannzange gegen eine andere Spannzange auszutauschen, die für das Einspannen des konkret benötigten Werkzeugs gebraucht wird, muss dann jeweils die gesamte Einheit aus Spannmutter und Spannzange getauscht werden. Es ist aber deutlich teurer, diverse verschiedene Einheiten aus Spannzange und Spannmutter auf Lager zu halten, als das bloße Auf-Lager-Halten diverser unterschiedlicher Spannzangen.

Aufgrund dessen ist bereits vorgeschlagen worden, die Einheit aus Spannzange und Spannmutter so zu gestalten, dass die Spannzange nach der vollständigen Abnahme der Spannmutter vom Futterkörper aus der Spannmutter ausgehängt werden kann. Das kostet allerdings unnötige Zeit beim Werkzeugwechsel, denn es reicht nicht, die Spannmutter nur zu lösen, stattdessen muss sie völlig abgeschraubt werden.

Die DE 20 13 229 A1 zeigt ein Spannzangenfutter mit einem Futterkörper, einer Spannzange und einer mehrteiligen Spannmutter. Die D1 zeigt Kupplungselemente am Spannring und Kupplungselemente am Futterkörper, wobei die Kupplungselemente zusammenwirken.

### Das der Erfindung zugrunde liegende Problem

Vor diesem Hintergrund liegt der Erfindung das Problem zugrunde, ein Spannzangenfutter zu schaffen, bei dem trotz der Verbindung der Spannzange mit der Spannmutter über ein Wälzlager ein schneller Wechsel nur der Spannzange gewährleistet ist.

### Die erfindungsgemäße Lösung

Die erfindungsgemäße Lösung erfolgt mit den Merkmalen des Anspruchs 1, mit den Merkmalen des Anspruchs 12, und mit den Merkmalen des Anspruchs 13.

Es wird ein Spannzangenfutter zum Einspannen eines Werkzeugschafts vorgeschlagen, das einen Futterkörper, eine Spannzange und eine mehrteilige Spannmutter besitzt, die aus einem Spannring und einem Gewindeköper besteht. Der Spannring und der Gewindeabschnitt sind über ein Wälzlager drehbar und ansonsten formschlüssig miteinander verbunden. Dadurch entfällt die Notwendigkeit einer der Gleitreibung unterworfenen und daher nur bedingte Genauigkeit gewährleistenden Relativbewegung zwischen der Spannmutter bzw. deren Spannring und dem Kragen der Spannzange. Stattdessen wird die Spannmutter durch diese Maßnahme zweigeteilt. Ihr Spannring braucht sich gegenüber der Spannzange beim Anziehen der Spannmutter nicht mehr zu bewegen. Die benötigte Relativbewegung findet vielmehr in dem Wälzlager zwischen dem Gewindeabschnitt der Spannmutter und deren Spannring statt. Sie führt nicht zur Beeinträchtigung der Rundlaufgenauigkeit der Spannzange, da das Wälzlager von Haus aus sehr genau gefertigt werden kann und zudem die Reibungskräfte entscheidend verringert werden, so dass die beim Eintreiben vom für das Schließen der Spannzange verantwortlichen Konus ausgehende Zentrierwirkung nicht beeinträchtigt wird.

Erfindungsgemäß weisen der Spannring und die Spannzange formschlüssig wirkende Kupplungselemente auf. Diese sind so gestaltet, dass die Spannzange, wenn sie eine oder eine von mehreren bestimmten Verdrehstellungen relativ zum Spannring einnimmt, durch die dem Futterkörper abgewandte Zentralöffnung des auf dem Futterkörper gehaltenen Spannrings hindurch in die Spannzangenaufnahme eingesetzt werden kann, indem sich die Kupplungselemente in Richtung der Längsachse L des Spannzangenfutters aneinander vorbei bewegen. Die Kupplungselemente sind dabei so gestaltet, dass sie anschließend durch Verdrehen des Spannrings relativ zur Spannzange miteinander in Eingriff gebracht werden können. Dadurch kann der Spannring die ihm vom Gewindeabschnitt beim Anziehen vermittelten Kräfte über die Kupplungselemente auf die Spannzange übertragen und die Spannzange in den Futterkörper eintreiben.

Auf diese Art und Weise wird ein schneller Austausch der Spannzange möglich. Denn es besteht keine Notwendigkeit mehr, die Spannmutter vollständig vom Futterkörper abzuschrauben, um die Spannzange auszuwechseln. Stattdessen reicht es, die Spannmutter loszuschrauben, dann den Spannring - vorzugsweise weniger als 45° - zu drehen, um die Kupplungselemente außer Eingriff zu bringen, und dann die Spannzange durch die Zentralöffnung der noch auf dem Futterkörper befindlichen Spannschraube herauszuziehen. Die Spannmutter kann dabei vollständig vom Futterkörper abnehmbar sein, entscheidend ist aber, dass sie jedenfalls nicht vollständig vom Futterkörper abgenommen werden muss.

Das ist insbesondere dann von Vorteil, wenn die Spannmutter nicht mittels eines einfachen Gewindes auf den Futterkörper aufgeschraubt wird, sondern unter Zwischenlage von Wälzkörpern. Denn hier muss das zwischen der Spannmutter und dem Futterkörper ausgebildete Wälzlager nicht geöffnet werden, um die Spannzange zu wechseln.

Zudem besteht dadurch, dass die Spannmutter erstmals dauerhaft auf dem Futterkörper verbleibt, die Möglichkeit, eine zuverlässige Abdichtung des Gewindeabschnitts der Spannmutter zu verwirklichen und optional auch das Wälzlager abzudichten. Der Wegfall der Notwendigkeit, die Spannmutter vollständig vom Futterkörper abschrauben zu müssen, um die Spannzange zu wechseln, kommt schließlich auch der Rundlaufgenauigkeit zugute, denn der Gewindeverschleiß wird deutlich verringert.

Erfindungsgemäß weist die Spannzange und der Futterkörper interagierende erste und zweite Formschlusselemente auf, die sicherstellen, dass die Spannzange nur in einer oder mehreren vorgegebenen Verdrehpositionen in den Futterkörper eingesetzt werden kann. Solche Formschlusselemente können durch einen polygonförmigen Bereich an der Spannzange - vorzugsweise an deren dem Futterkörper zugewandten Ende - und einen komplementären polygonförmigen Bereich der Spannzangenaufnahme gebildet werden. Eine solche Ausgestaltung ist besonders günstig. Es ist aber auch die lokale Ausbildung mindestens eines Sperrelements und einer korrespondierenden Sperrnut denkbar.

### Bevorzugte Ausgestaltungsformen

Bevorzugt sind Kupplungselemente so gestaltet, dass der Gewindeabschnitt auch bei seinem Lösen über die Kupplungselemente Kräfte auf die Spannzange überträgt, die die Spannzange aus der Spannzangenaufnahme lösen. Das erlaubt den Einsatz von Spannzangen und Spannzangenaufnahmen mit einem kleinen Konusspitzenwinkel, also Spannzangen, die durch einfaches Lösen der Spannmutter (ohne dass dabei Zugkräfte auf die Spannzange übertragen werden) sich nicht ohne weiteres aus dem konischen Sitz lösen. Bedingt durch die Reibung können die Kräfte, die zum Lösen der Spannzange notwendig sind, gleich oder sogar größer sein als die Kräfte, die zum Spannen notwendig sind.

Die Verwendung kleiner Konusspitzenwinkel - vorzugsweise 10°, idealerweise ≤ 7,5° - erlaubt es, bei vorgegebenem Anzugsdrehmoment der Spannmutter die Spannzange besonders fest zu schließen und gewährleistet so ein besonders drehmomentfestes Festsetzen des Werkzeugschafts. Außerdem lassen sich so eine besonders gute Zentrierung und damit ein hervorragender Rundlauf erreichen.

Idealerweise können die Kupplungselemente werkzeuglos in und außer Eingriff gebracht werden, um die Spannzange in den Futterkörper einzubauen oder aus diesem auszubauen. Es wird dann allenfalls zum Anziehen und Lösen der Spannmutter ein Werkzeug gebraucht, ansonsten kann der Spannzangenwechsel werkzeuglos vonstattengehen, was ihn wesentlich einfacher macht.

Besonders zweckmäßig ist es, wenn die Kupplungselemente mindestens einen Bajonettverschluss bilden.

Idealerweise werden die Kupplungselemente aus mehreren, in Umfangsrichtung jeweils durch einen Korridor voneinander getrennten Vorsprüngen am Spannring und an der Spannzange gebildet.

Vorzugsweise sind die Vorsprünge als Zähne mit angeschrägten Zahnflanken ausgebildet, die idealerweise über Kontaktflächen miteinander interagieren, die einen spitzen Winkel von ≥ 80° gegenüber der Längsachse des Spannzangenfutters einschließen. Da die Zähne kreisringförmig verlaufen, wird der besagte spitze Winkel am jeweiligen Querschnitt senkrecht zur Längsachse des Spannzangenfutters gemessen. Hierdurch wird eine günstige Zentrierwirkung miteinander in Eingriff stehender Zähne erreicht, ohne dass dabei übermäßig große Radialkräfte entstehen.

Günstigerweise weisen die Zähne angeschrägte, freie Stirnflächen auf. Die Stirnflächen sind dabei die schmalen Endseiten der Zähne, die in Umfangsrichtung zeigen. Auf diese Art und Weise bilden sie Kupplungselemente, die sich besonders gut miteinander in Eingriff bringen lassen.

Idealerweise weisen der Spannring und der Futterkörper dritte und vierte Formschlusselemente auf, bei denen es sich um eine Nase und eine Vertiefung handeln kann, die vorzugsweise zwei unterschiedlich tiefe Bereiche besitzt. Diese interagieren derart, dass der Spannring die Spannzange nur dann in den Futterkörper eintreiben kann, wenn der Spannring eine bestimmte Position relativ zum Futterkörper und damit auch relativ zur Spannzange einnimmt. Hierdurch wird sichergestellt, dass die Spannmutter nur dann angezogen werden kann, wenn die Kupplungselemente vollständig miteinander in Eingriff gebracht worden sind. So werden überlastungsbedingte Beschädigungen oder ein unerwartetes Lösen des Spannzangenfutters im Zerspanungsbetrieb vermieden, die denkbar sind, wenn die Spannmutter bei nur unzulänglich formschlüssig ineinandergreifenden Kupplungselementen angezogen würde.

Idealerweise sind die dritten und vierten Formschlusselemente derart gestaltet, dass der Spannring der Spannmutter erst durch das teilweise Lösen des Gewindeabschnitts der Spannmutter vom Futterkörper so weit freigegeben wird, das er jetzt weit genug gegenüber dem Futterkörper gedreht werden kann, um die Kupplungselemente außer Eingriff zu bringen, so dass die Spannzange über die Zentralöffnung des Spannrings aus dem Futterkörper entnommen werden kann. Bevorzugt ist die Konstruktion so ausgestaltet, dass ein Drehen des Spannringes erst dann möglich ist, wenn die Spannzange soweit aus dem Futterkörper gezogen wurde, dass kein Reibschluss mehr zwischen Spannzange und Futterkörper besteht.

Besonders zweckmäßig ist es, wenn die dritten und vierten Formschlusselemente einen ersten und einen zweiten Anschlag bilden, zwischen denen der Spannring bei teilweise gelöstem Gewindeabschnitt hin und her gedreht werden kann.

Dabei legt der erste Anschlag die Position des Spannrings fest, in der die Kupplungselemente an der Spannzange und dem Spannring vollständig über die Kupplungselemente miteinander in Eingriff stehen, so dass die Spannzange in den Futterkörper eingetrieben werden kann. Auf diese Art und Weise wird dem Nutzer schnell und sicher signalisiert, dass die Kupplungselemente anziehbereit miteinander in Eingriff stehen. Ein gefährliches Überdrehen, bei dem der Benutzer meint, er habe die Kupplungselemente vollständig miteinander in Eingriff gebracht, wobei er in Wirklichkeit so weit gedreht hat, dass sich die Kupplungselemente schon wieder teilweise voneinander zu trennen beginnen, wird vermieden. Das ist besonders zweckmäßig, wenn die Kupplungselemente sämtlich durch Zähne gebildet werden, die zwischen sich zwar eine Nut einschließen, die aber an beiden Enden offen ist.

Der zweite Anschlag legt die Position des Spannrings fest, in der die Kupplungselemente vollständig außer Eingriff sind. Er signalisiert dem Benutzer schnell und sicher, dass die Spannzange nun entnommen werden kann. Der Benutzer wird der Notwendigkeit enthoben, genau zu "zielen", um den Spannring wirklich so zu drehen, dass die Kupplungselemente des Spannrings und der Spannzange beim Herausziehen der Spannzange in Richtung der Längsachse aneinander vorbeibewegt werden können.

Im Regelfall kann der Spannring nur zwischen diesen beiden Anschlägen hin und her gedreht werden. Der Verdrehwinkel zwischen beiden Anschlägen beträgt günstigerweise weniger als 45°.

### Figurenliste

Die Figur 1 zeigt einen Längsschnitt durch ein Ausführungsbeispiel des erfindungsgemäßen Spannzangenfutters entlang von dessen Längsachse L.

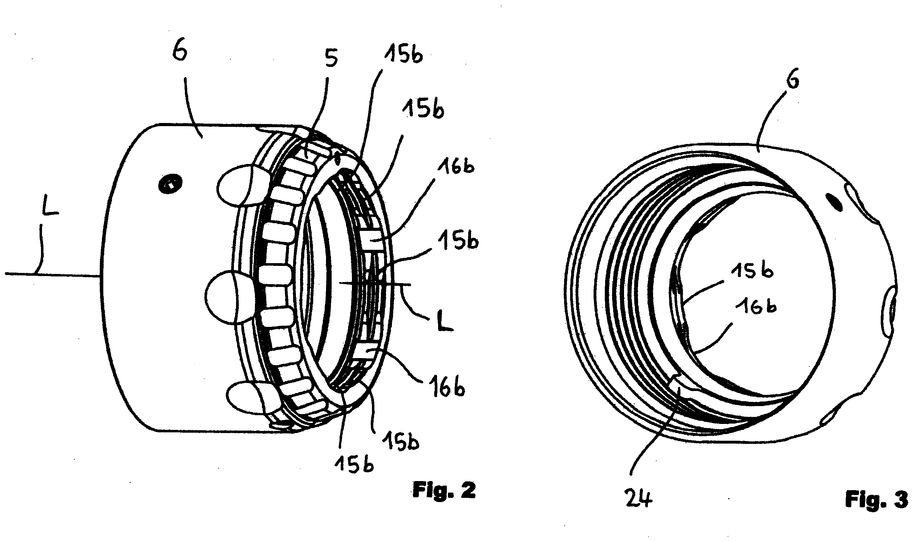

Die Figur 2 zeigt die zu dem erfindungsgemäßen Spannzangenfutter gehörende, zweigeteilte Spannmutter in Einzelansicht schräg von der Seite.

Die Figur 3 zeigt die Spannmutter gemäß Figur 2 schräg von hinten.

Die Figur 4 zeigt einen Längsschnitt entlang der Längsachse L durch die Spannmutter gemäß Figur 2.

Die Figur 5 zeigt eine Seitenansicht einer Spannzange, die zu dem erfindungsgemäßen Spannfutter gemäß Figur 1 gehört.

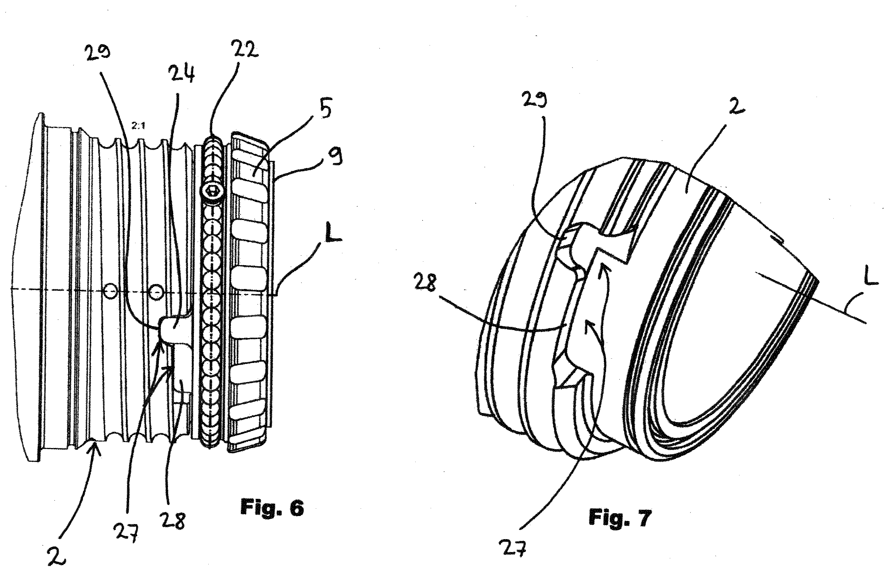

Die Figur 6 zeigt, welche Verhältnisse sich bieten, wenn nur der Spannring auf das Spannfutter aufgesetzt ist, bei weggeschnittenem Gewindeabschnitt.

Die Figur 7 zeigt eine Ausschnittvergrößerung des Futterkörpers zur Verdeutlichung der Ausnehmung des Futterkörpers.

Die Figur 8 zeigt eine Ausschnittvergrößerung aus dem oberen Bereich der Figur 1.

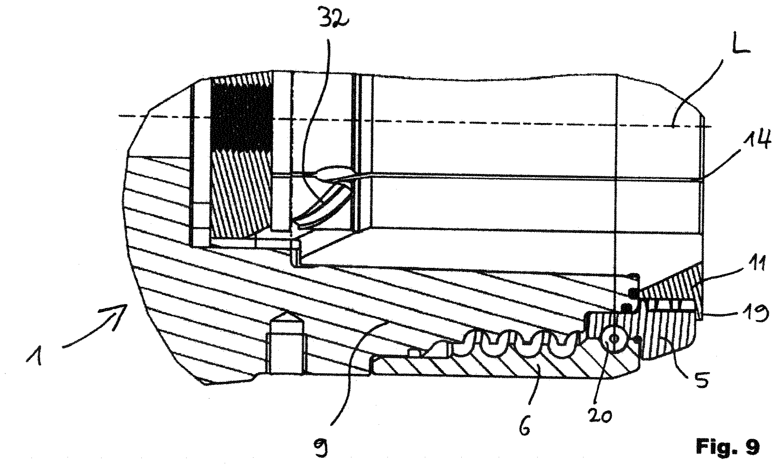

Die Figur 9 zeigt eine Ausschnittvergrößerung aus dem unteren Bereich der Figur 1.

Die Figur 10 zeigt ein zweites Ausführungsbeispiel einer für das erfindungsgemäße Spannzangenfutter vorgesehenen Spannzange in Seitenansicht.

Die Fig. 11 zeigt einen Schnitt senkrecht zur Längsachse entlang der Markierung E-E, gem. Fig. 10.

Die Fig. 12 zeigt einen Schnitt senkrecht zur Längsachse durch das von Fig. 14 gezeigte Spannzangenfutter.

Die Fig. 13 zeigt einen Schnitt senkrecht zur Längsachse durch das von Fig. 14 gezeigte Spannzangenfutter in einer anderen Ebene.

Die Fig. 14 zeigt einen Schnitt entlang der Längsachse L durch ein anderes Ausführungsbeispiel eines erfindungsgemäßen Spannzangenfutters.

### Ausführungsbeispiel

### Das Spannzangenfutter als Ganzes

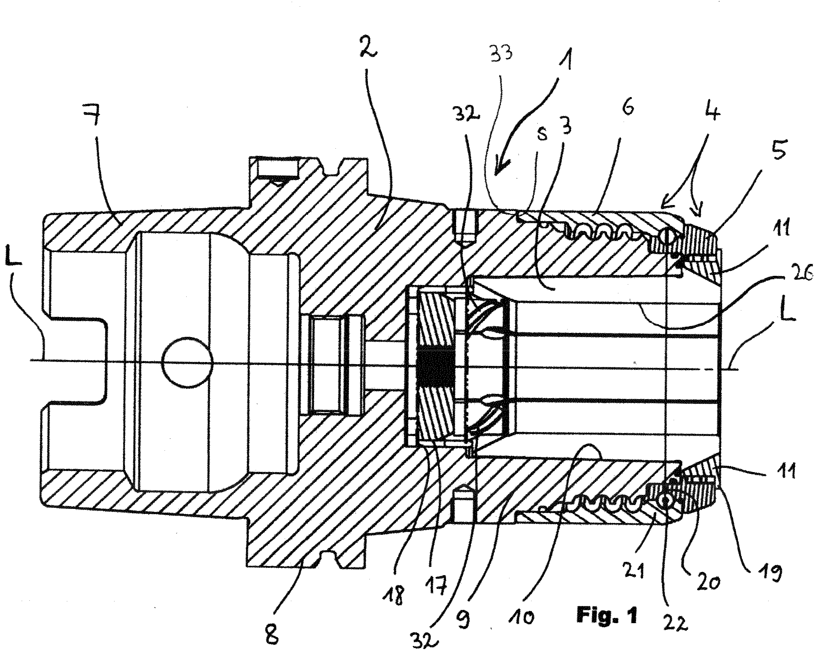

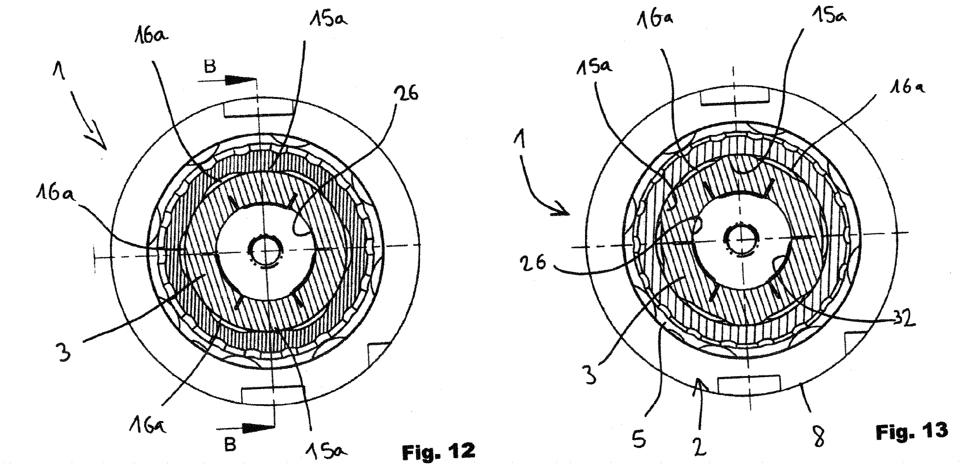

Die Figur 1 und die Figuren 12, 13, 14 zeigen das Spannzangenfutter 1 als Ganzes.

Wie man sieht, besteht das Spannzangenfutter 1 aus einem metallenen Futterkörper 2, einer metallenen Spannzange 3 und einer mehrteiligen Spannmutter 4.

Der Futterkörper 2 besitzt einen Kupplungsabschnitt 7 zum Ankuppeln des Futterkörpers an eine Werkzeugmaschine. Der Kupplungsabschnitt hat hier die Gestalt einer Hohlschaftkupplung, alternativ beispielsweise die Gestalt einer Steilkegelkupplung.

Darüber hinaus besitzt der Futterkörper 2 im Regelfall einen Flansch 8, an dem eine Greifzange für den automatischen Werkzeugwechsel ansetzen kann.

Schließlich besitzt der Futterkörper 2 eine Hülsenpartie 9. Die Hülsenpartie 9 besitzt eine Spannzangenaufnahme 10.

Schon an dieser Stelle ist bemerkenswert, dass der Futterkörper 2 bzw. dessen Hülsenpartie 9 an seiner/ihrer dem Spannring 5 zugewandten Stirnseite mindestens eine Ausnehmung 27 trägt. Die Ausnehmung 27 ist so gestaltet, dass von der dem Spannring 5 zugewandten Stirnseite her in die Ausnehmung eingegriffen werden kann. Die Ausnehmung 27 ist dabei so gestaltet, dass sie zwei Abschnitte 28 und 29 besitzt, mit denen sie in Richtung der Längsachse L unterschiedlich weit in den Futterkörper 2 bzw. dessen Hülsenpartie hineinragt, so dass man von einem flacheren Abschnitt 28 und einem tieferen Abschnitt 29 sprechen kann. Die Funktion und der Zweck dieser Ausnehmung 27 und ihrer einzelnen Abschnitte 28 und 29 werden an späterer Stelle noch näher erläutert. Idealerweise sind mehrere solcher Ausnehmungen 27 vorgesehen, die in Umfangsrichtung gesehen gleichmäßig verteilt angeordnet sind.

### Die Spannzange

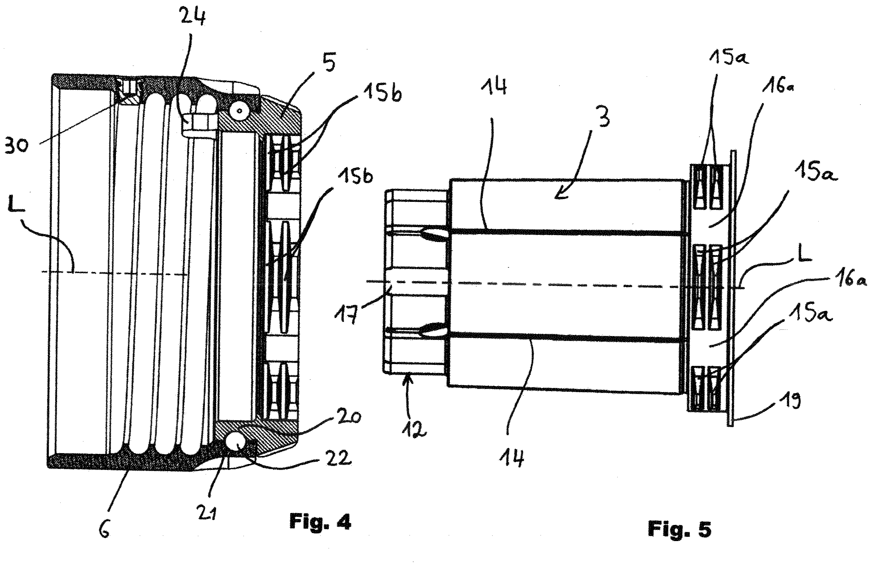

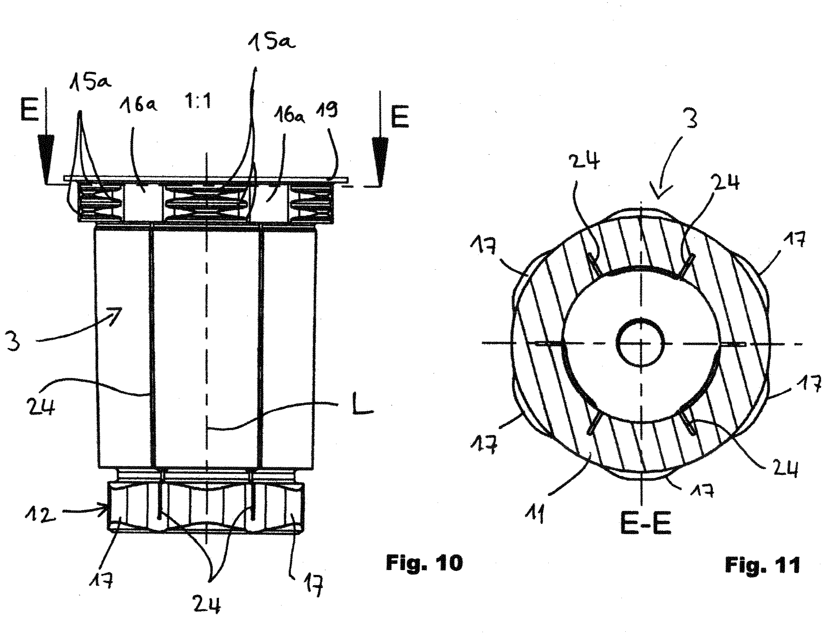

Die Spannzange 3 ist am besten anhand der Figur 5 und der Fig. 10 sowie 11 zu erkennen.

Wie man sieht, besteht die Spannzange 3 aus einem Kragenabschnitt 11 und einem Endabschnitt 12. Dazwischen ist ein Spannabschnitt 13 ausgebildet. Die Spannzange besitzt in ihrem Zentrum eine Werkzeugaufnahme 26, deren Durchmesser im Regelfall auf einen bestimmten Werkzeugschaft-Nenndurchmesser abgestimmt ist, um diesen fest einspannen zu können, vgl. Fig. 1.

Der Kragenabschnitt 11 ist im Regelfall als ein in Umfangsrichtung vollständig in sich geschlossener und nicht vollständig, sondern meist nur teilweise geschlitzter Ring ausgebildet. Das verleiht dem Kragenabschnitt eine hohe Formstabilität, so dass er eine hohe Zentrierfähigkeit besitzt.

Vorzugsweise ist der Endabschnitt 12 der Spannzange 3 ebenfalls nicht vollständig, sondern meist nur teilweise geschlitzt und ebenfalls als in Umfangsrichtung in sich geschossener Ring ausgebildet.

Dagegen ist der Spannabschnitt 13 mit in Richtung parallel zur Längsachse oder alternativ (hier nicht gezeigt) schraubenförmig verlaufenden Schlitzen 14 ausgestattet. Der Spannabschnitt ist an seinem Außenumfangsmantel vorzugsweise kegelförmig gestaltet, meist mit einem Konusspitzenwinkel zwischen 2° und 10°.

Die Hülsenpartie 9 ist im Bereich ihrer Spannzangenaufnahme 10 in komplementärer Weise kegelförmig gestaltet. Das bedeutet, dass die einzelnen Elemente des Spannabschnitts 13 in radialer Richtung zusammengedrückt werden, wenn die Spannzange 3 in die Spannzangenaufnahme 10 der Hülsenpartie eingetrieben wird, in Richtung parallel zur Längsachse L.

Auffallend ist noch, dass die Spannzange 3 an der freien Außenumfangsfläche ihres Kragenabschnitts 11 mit mehreren kragenseitigen Vorsprüngen 15a ausgerüstet ist. Als freie Außenumfangsfläche wird hier die Umfangsfläche der Spannzange bezeichnet, die auch bei völlig geschlossener Spannzange aus dem Futterkörper bzw. dessen Hülsenpartie herausragt.

Die Vorsprünge 15a sind vorzugsweise so gestaltet, dass in Richtung der Längsachse L vorzugsweise mehrere, meist zwei oder drei Vorsprünge 15a in einer Flucht hintereinander angeordnet sind. Sie sind in Richtung der Längsachse L voneinander beabstandet und bilden so eine Nut bzw. Vertiefung zwischen sich aus, in die ein entsprechendes Gegenstück des Spannrings eingeschoben werden kann.

In Umfangsrichtung gesehen sind unmittelbar voneinander benachbarte Vorsprünge durch einen in Richtung parallel zur Längsachse L verlaufenden Korridor 16a voneinander getrennt. Die in Umfangsrichtung gemessene Breite und die Tiefe des Korridors 16a in radialer Richtung sind so gewählt, dass die später noch näher zu beschreibenden, die spannringseitigen Vorsprünge 15b ausbildenden Bereiche des Spannrings durch den Korridor 16a hindurchbewegt werden können, wenn sie in Richtung der Längsachse L mit ihm zum Fluchten gebracht worden sind. Dabei ist der Korridor 16a in Umfangsrichtung vorzugweise um nicht mehr als 15 % breiter als die Vorsprünge 15b, für deren Aufnahme er bestimmt ist. Auf diese Art und Weise wird eine möglichst hohe Tragfähigkeit der Vorsprünge 15a, 15b erreicht, da diese bei geschlossener Kupplung auf größtmöglicher Länge in Umfangsrichtung gegeneinander anliegen können.

Jeder der Vorsprünge 15a weist vorzugsweise die Gestalt eines in radialer Richtung von der Umfangsoberfläche des Kragenabschnitts 11 abstehenden Zahns auf. In Richtung der Längsachse L benachbarte Zähne sind im Regelfall parallel zueinander angeordnet. Die Zähne weisen vorzugsweise angeschrägte Zahnflanken auf, d. h. dass sich ihre in Richtung parallel zur Längsachse L gemessene Breite vom Zahnfuß aus, wo sie am größten ist, zum radial frei endenden Zahnkopf hin verringert. Auf diese Art und Weise geht von den Zähnen eine Zentrierwirkung aus, denn die komplementären, noch näher zu behandelnden Vorsprünge 15b des Spannrings 5 sind ähnlich ausgestaltet. Dennoch sind die durch die Zahnflanken gebildeten Kontaktflächen, über die die Zähne des Spannrings und der Spannzange bei geschlossener Kupplung gegeneinander anliegen, im Wesentlichen senkrecht zur Längsachse des Spannzangenfutters ausgerichtet. Der spitze Winkel, den sie mit der Längsachse einschließen, ist vorzugsweise nicht kleiner als 80°.

Im Idealfall weist jeder der Zähne zusätzlich zwei angeschrägte Stirnseiten auf, d. h. die Schmalseiten sind angeschrägt, so dass sich der Zahnfuß weiter in Umfangsrichtung erstreckt als der Zahnkopf. Unter einer Stirnseite eines Zahns wird dabei die Seite verstanden, die zwei sich gegenüberliegende, sich in Umfangsrichtung erstreckende Zahnflanken miteinander verbindet. Eine solche Ausgestaltung erleichtert es, die Zähne am Außenumfang des Kragenabschnitts 11 der Spannzange 3 mit den entsprechenden Zähnen an der Innenumfangsfläche des Spannrings 5 in und außer Eingriff zu bringen.

Die Spannzange 3 und der Futterkörper 2 sind mit interagierenden ersten und zweiten Formschlusselementen 17 und 18 ausgestattet. Im vorliegenden Fall ist der Endabschnitt 12 der Spannzange 3 als solcher als erstes Formschlusselement 17 ausgestattet. Dies, indem der Endabschnitt 12 nicht kreisrund ausgeführt ist, sondern zumindest örtlich von der Kreisform abweicht. Der den Endabschnitt 12 aufnehmende Bereich der Spannzangenaufnahme 10 ist komplementär gestaltet und bildet dadurch das zweite Formschlusselement 18, das das erste Formschlusselement 17, in Umfangsrichtung anschlagend, formschlüssig aufnimmt.

Auf diese Art und Weise wird sichergestellt, dass die Spannzange in einer einzigen Verdrehposition und damit in immer relativ zum Futterkörper 2 gleicher Position in den Futterkörper 2 eingesetzt werden kann oder zumindest erzwungen werden kann, dass die Spannzange 3 in unterschiedlichen Verdrehpositionen in den Futterkörper 2 eingesetzt werden kann, die sich aber alle entsprechen, so dass, egal welche Verdrehposition eingenommen wird, die Spannzange 3 in immer gleicher Art und Weise im Futterkörper 2 zu liegen kommt.

Bemerkenswert ist noch, dass der Kragenabschnitt 11 der Spannzange 3 mit einem Anschlag 19 versehen ist, der den Kragenabschnitt 11 in radialer Richtung überragt. Dieser Anschlag 19 erzwingt, dass die Spannzange stets nur von der dem Spannring 5 abgewandten Seite her in die mehrteilige Spannmutter 4 eingeschoben werden kann. Der Anschlag deckt zudem den ansonsten stirnseitig offenen Spalt zwischen dem Spannring 5 und dem Kragenabschnitt 11 der Spannzange 3 ab und schützt dadurch vor dem Eindringen von Spänen in den empfindlichen Bereich, in dem die Spannzange 3 an den Spannring 5 angekuppelt ist.

Bemerkenswert ist noch, dass in dem Bereich der Werkzeugaufnahme 26 der Spannzange mindestens ein Sperrelement 32 angeordnet ist. Dieses Sperrelement kann in eine Sperrnut am Werkzeugschaft eingreifen. Es verhindert dann, dass der bei geschlossener Spannzange im - regelmäßig drehmomentfesten - Presssitz gehaltene Werkzeugschaft in Richtung parallel zur Längsachse auswandern kann, weil die im Betrieb auftretenden Schwingungen trotz des Presssitzes zur axialen Schaftmigration in kleinsten Schritten anregen.

### Die mehrteilige Spannmutter

Die Figur 4 zeigt in den Einzelheiten, wie die mehrteilige Spannmutter 4 gestaltet ist.

Die mehrteilige Spannmutter 4 besteht aus einem Spannring 5 und einem Gewindeabschnitt 6.

Der Gewindeabschnitt 6 besitzt regelmäßig ein Innengewinde, das auf einem - meist integral - in den Futterkörper bzw. dessen Hülsenpartie eingearbeiteten Außengewinde läuft. Vorzugsweise sind zwischen dem Innen- und dem Außengewinde ebenfalls hier nicht figürlich dargestellte Wälzkörper gehalten, so dass in dem so gebildeten Gewinde nur Rollreibung auftritt. Die Wälzkörper können Teil eines Wälzkörperumlaufsystems sein, bei dem Wälzkörper von einen Ende des Gewindes zum anderen überführt werden. Vorzugsweise ist die Gestaltung jedoch so gewählt, dass der dem Ende des Gewindes zugewandte Wälzkörper (in Anzugsrichtung des Gewindeabschnitts gesehen) erst dann das Ende des Gewindes erreicht, wenn die Spannmutter vollständig angezogen ist. Je nach konkretem Anwendungsfall ist es besonders bevorzugt die Kugeln käfiglos oder mit Käfig zwischen dem Gewindeabschnitt 6 und dem Spannring 5 einzubauen

Der Spannring 5 ist in seiner Innenumfangsfläche mit mehreren spannringseitigen Vorsprüngen 15b ausgerüstet. Die spannringseitigen Vorsprünge 15b sind auch hier so gestaltet, dass in Richtung der Längsachse L vorzugsweise mehrere Vorsprünge 15b in einer Flucht hintereinander angeordnet sind. In Umfangsrichtung gesehen sind unmittelbar voneinander benachbarte Vorsprünge 15b durch einen in Richtung parallel zur Längsachse L verlaufenden Korridor 16b voneinander getrennt.

Die in Umfangsrichtung gemessene Breite und die Tiefe des Korridors 16b in radialer Richtung sind so gewählt, dass die oben beschreibenden Vorsprünge 15a der Spannzange durch den jeweiligen Korridor 16b hindurchbewegt werden können, wenn sie in Richtung der Längsachse L mit ihm zum Fluchten gebracht worden sind. Dabei ist der Korridor 16b in Umfangsrichtung vorzugweise um nicht mehr als 15 % breiter als die Vorsprünge 15a, für deren Aufnahme er bestimmt ist. Auf diese Art und Weise wird eine möglichst hohe Tragfähigkeit der Vorsprünge 15a, 15b erreicht, wie oben bereits erwähnt.

Jeder der spannringseitigen Vorsprünge 15b weist vorzugsweise eine Gestalt auf, die zu der Gestalt der Vorsprünge 15a der Spannzange komplementär ist. Dadurch lassen sich die Vorsprünge 15b des Spannrings 5 idealerweise spielfrei - d. h. bevorzugt völlig spielfrei bzw. sogar mit einer werkzeuglos herstellbaren und lösbaren Vorspannung oder zumindest im Wesentlichen spielfrei (Toleranzen) - zwischen die Vorsprünge 15a der Spannzange eindrehen bzw. umgekehrt. Dadurch wird eine besonders gute Zentrierung der Spannzange 3 in dem Spannring 5 erreicht.

In einer weiteren Ausführungsform ist der Abstand der spannringseitigen Vorsprünge 15b parallel zur Längsachse L geringfügig kleiner als der Abstand der spannzangenseitigen Vorsprünge 15a. Dadurch wird erreicht, dass sich die Vorsprünge 15a und 15b unter der beim Anziehen eintretenden elastischen Verformung optimal aneinander anlegen und so eine maximale Spannkraft übertragen können.

Darüber hinaus bildet der Spannring 5, im Regelfall auf seiner dem Futterkörper zugewandten Seite, den Innenring 20 eines Wälzlagers.

Der Gewindeabschnitt 6 bildet - im Regelfall auf seiner dem Kupplungsabschnitt 7 abgewandten Seite - den Außenring 21 eines Wälzlagers aus.

Der vorzugsweise integral an den Spannring 5 angeformte Wälzlagerinnenring 20 und der vorzugsweise integral an den Gewindeabschnitt 6 angeformte Wälzlageraußenring 21 sind durch Wälzkörper 22 miteinander verbunden. Die Wälzkörper stellen im Regelfall eine in Längsrichtung L formschlüssige Verbindung zwischen dem Spannring 5 und dem Gewindeabschnitt 6 dar. Zu diesem Zweck sind der Wälzlagerinnenring 20 und der Wälzlageraußenring 21 vorzugsweise jeweils mit einer in Umfangsrichtung verlaufenden, vollständig in sich geschlossenen Wälzkörpernut versehen, etwa einer Rille, die ein Rillenkugellager bildet. In diese Wälzkörpernut 23 werden die Wälzkörper 22 bevorzugt käfiglos eingebracht.

Zwischen diesen beiden Komponenten können dadurch hohe Kräfte übertragen werden, gleichzeitig kann der Gewindeabschnitt 6 im Wesentlichen reibungsfrei gegenüber dem Spannring 5 verdreht werden.

Die Anzahl der Wälzkörper 22 wird bevorzugt so gewählt, dass die Wälzkörpernut soweit mit Wälzkörpern ausgefüllt ist, dass der Abstand unmittelbar benachbarter Wälzkörper kleiner ist als die Erstreckung eines Wälzkörpers in Umfangsrichtung entlang der Wälzkörpernuten, idealerweise um mindestens 50 % besser um mindestens 75 %. Durch ein derartiges Ausfüllen der Wälzkörpernuten 23 mit einer so großen Zahl von Wälzkörpern wird eine unsymmetrische Verteilung der Wälzkörper entlang der Wälzkörpernut weitgehend vermieden. Dadurch können dauerhaft, ohne Ermüdungsschäden befürchten zu müssen, hohe in Richtung der Längsachse L wirkende Kräfte zwischen dem Spannring 5 und dem Gewindeabschnitt 6 übertragen werden. Zudem wird die Ausbildung einer Unwucht durch unsymmetrisch in der Rille verteilte Wälzkörper weitgehend vermieden.

Schließlich besitzt entweder der Spannring 5 oder der Gewindeabschnitt 6 eine Ausnehmung, über die die Wälzkörper 22 in den durch die Wälzkörpernuten 20 und 21 gebildeten Hohlraum geführt werden können, der sich zwischen dem Gewindeabschnitt 6 und dem Spannring 5 auftut, wenn diese in ihrer Betriebsposition ineinander eingesteckt sind. Die Ausnehmung lässt sich nach dem Einführen der Wälzkörper 22 bevorzugt mithilfe einer Schraube verschließen. Auf diese Art und Weise werden der Spannring und der Gewindeabschnitt dauerhaft miteinander verbunden, das bedeutet, dass sie sich werkzeuglos nicht voneinander trennen lassen.

Schon an dieser Stelle ist bemerkenswert, dass die Spannmutter an ihrer dem Flansch 8 des Futterkörpers 2 zugewandten Stirnseite mindestens einen oder mehrere bevorzugt gleichmäßig in Umfangsrichtung verteilte Anschläge besitzt. Dieser Anschlag bildet ein drittes Formschlusselement und ist vorzugsweise als Vorsprung oder Nase 24 ausgebildet, der oder die in Richtung der Längsachse L über die besagte Stirnseite des Spannrings hinausragt. Die spezielle Funktion dieser Nase wird später erläutert.

Der Vollständigkeit halber ist darauf hinzuweisen, dass die Vorsprünge 15a alternativ auch als von der Innenumfangsfläche radial nach innen abstehende Vorsprünge ausgebildet sein können. In diesem Fall trägt der Spannring die Vorsprünge 15b.

### Die erfindungsgemäße Kupplung

Die Vorsprünge 15a und die Vorsprünge 15b bilden bevorzugt die erfindungsgemäße Kupplung aus.

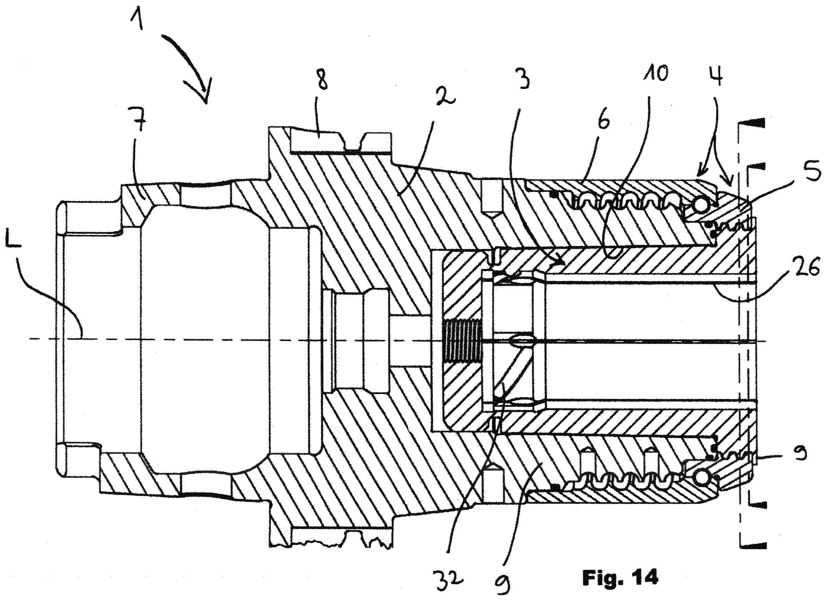

Wie die Vorsprünge 15a, 15b miteinander interagieren, um so die erfindungsgemäße Kupplung zu bilden, das zeigen am besten die Fig. 14, 12 und 13 - wobei die beiden letztgenannten Figuren Schnitte entlang der in Fig. 14 markierten Schnittlinien zeigen.

Vorzugsweise sind die Vorsprünge 15a und die Vorsprünge 15b so genau gefertigt, dass die Kupplung im geschlossenen Zustand nicht nur eine in Längsrichtung L formschlüssige Verbindung zwischen der Spannzange und dem Spannring herstellt, sondern die Spannzange auch gegenüber dem Spannring formschlüssig zentriert.

Idealerweise zwingen die Kupplung bzw. ihre Vorsprünge die Spannmutter und die Spannzange stets in eine Position relativ zueinander, bei der die Mittellängsachse der Spannzange und die Mittellängsachse des Spannrings relativ zueinander eine Positionsdifferenz von nicht mehr als 4/100 mm, besser von nicht mehr als 2/100 mm haben.

Die Tatsache, dass der Spannring und der Gewindeabschnitt über Wälzkörper miteinander verbunden sind (dazu sogleich), trägt ebenfalls zur besonders guten Zentrierung der Spannzange bei. Sinngemäß Gleiches gilt, wenn der noch näher zu beschreibende Gewindeabschnitt 6 seinerseits über Wälzkörper drehbar am Futterkörper gehalten ist.

Um eine Spannzange einbauen zu können, die zum Einspannen eines bestimmten Werkzeugschaft-Nenndurchmessers mit dem konkret vorliegenden Spannzangenfutter benötigt wird, wird wie folgt vorgegangen:
Der Spannring 5 ist noch über den ihn haltenden Gewindeabschnitt 6 auf die Hülsenpartie 9 des Futterkörpers 2 aufgeschraubt. Die Spannzangenaufnahme ist leer.

Die neu einzusetzende Spannzange wird nun so ausgerichtet, dass ihre spannzangenseitigen Vorsprünge 15a mit den Korridoren 16b in der Spannmutter fluchten. Zugleich fluchten ihre Korridore 16a mit den spannringseitigen Vorsprüngen 15b. So ausgerichtet, kann die Spannzange durch die zentrale Öffnung des Spannrings hindurch in die Spannzangenaufnahme eingeschoben werden. Dabei kommen - soweit vorhanden - automatisch die Formschlusselemente 17, 18 der Spannzange 3 und der Spannzangenaufnahme 10 miteinander in Eingriff, derart, dass die Spannzange bis zum Anschlag in die Spannzangenaufnahme 10 eingeschoben werden kann.

Allerdings lässt sich der Gewindeabschnitt 6 noch nicht oder noch nicht vollständig anziehen. Dies deshalb, weil die oben erläuterten dritten und vierten Formschlusselemente dies verhindern. Das dritte Formschlusselement z. B. in Gestalt des oben erläuterte Vorsprungs bzw. die diesen bevorzugt ausbildende Nase 24 ragt nämlich derzeit noch in den ersten, flacheren Abschnitt 28 der z.B. das vierte Formschlusselement bildenden Ausnehmung 27 hinein. Das dritte Formschlusselement schlägt daher beim Versuch, den Gewindeabschnitt anzuziehen, schon nach kurzer Zeit (in Richtung der Längsachse L gesehen) gegen das vierte Formschlusselement an, z. B. gegen den Grund des flacheren Abschnitts 28 der Ausnehmung 27.

Um den Gewindeabschnitt 6 anziehen zu können, muss der Spannring zunächst so weit (hier in Anzugsrichtung der Spannmutter 4) gedreht werden, dass der das dritte Formschlusselement bildende Vorsprung bzw. die dieses bildende Nase 24 in Richtung der Längsachse L mit dem tieferen Abschnitt 29 der ein viertes Formschlusselement bildenden Ausnehmung 27 fluchtet, vollständig bzw. zumindest im Wesentlichen, dann im Rahmen der Toleranz. Letzteres kann durch abgeschrägte Flanken der Nase 24 unterstützt werden, die kleinere Lageabweichungen der Nase 24 im Zuge des Anziehens beseitigen, weil die Nase im Zuge des Anziehens in ihre optimale Position gezwungen wird.

Durch dieses Drehen des Spannrings wird die erfindungsgemäße Kupplung geschlossen, denn die Vorsprünge 15a werden in Umfangsrichtung so verschoben, dass sie mit den spannzangenseitigen Vorsprüngen in Richtung der Längsachse fluchten, im Regelfall vollständig. Dabei bilden die spannzangenseitigen Vorsprünge 15a den ersten Teil der Kupplung und die spannringseitigen Vorsprünge 15b bilden den zweiten Teil der Kupplung.

Die Kupplung ist so gestaltet, dass sie hierdurch eine rein formschlüssige Verbindung herstellt, über die sowohl Kräfte in einer ersten Richtung entlang der Längsachse L übertragen werden können als auch Kräfte in einer zweiten entgegensetzten Richtung. Dadurch kuppelt die Kupplung die Spannzange 3 bidirektional in beide Richtungen der Längsachse L an den Spannring 5 an. Durch das Anziehen des Spannrings 5 mithilfe des noch näher zu erläuternden Gewindeabschnitts 6 kann die Spannzange eingetrieben werden. Durch Abdrücken des Spannrings 5 vom Futterkörper 2 mithilfe des Gewindeabschnitts 6 kann die Spannzange von diesem wieder aus dem Futterkörper herausgezogen und dadurch geöffnet werden.

Dabei wird durch das Zusammenspiel des ein drittes Formschlusselement bildenden Vorsprungs bzw. der Nase 24 und der speziell gestalteten, ein viertes Formschlusselement bildenden Ausnehmung 27 sichergestellt, dass der Gewindeabschnitt 6 wirklich nur dann angezogen werden kann, wenn die Kupplung vollständig geschlossen ist. Dadurch wird verhindert, dass durch das Anziehen des Gewindeabschnitts bei versehentlich nur halb geschlossener Kupplung Kräfte aufgebracht werden, die die Kupplungselemente überlasten und zu örtlichen Schäden an der Kupplung führen.

Zieht man nun, nach dem korrekten Verdrehen des Spannrings 5, den Gewindeabschnitt 6 an, zwingt man den Spannring dazu, sich in Richtung der Längsachse L auf die Hülsenpartie 9 zuzubewegen. Der Vorsprung bzw. die Nase 24 taucht dabei ungehindert immer tiefer in den tieferen Abschnitt 29 der Ausnehmung 27 ein, bis der Spannring gegen die freie Stirnfläche der Hülsenpartie zur Anlage kommt und dadurch auf Anschlag geht. Dabei wird die Spannzange 3 so tief in die Spannzangenaufnahme 10 der Hülsenpartie 9 eingetrieben, dass die für den sicheren Halt des Werkzeugschafts benötigten Kräfte von der Spannzange aufgebracht werden.

Zweckmäßigerweise ist im Bereich des Gewindeabschnitts 6 ein Anschlag oder insbesondere ein Anschlagstift 30 eingebaut, der verhindert, dass der Gewindeabschnitt noch weiter oder in schädlichem Umfang noch weiter angezogen werden kann, wenn der Spannring gegen die freie Stirnfläche der Hülsenpartie anschlägt. Auf diese Art und Weise werden Schäden durch ein versehentliches "Zu-fest-Anziehen" des Gewindeabschnitts verhindert. Das ist wichtig, da die Reibungskräfte im Bereich des Gewindeabschnitts und dessen Wälzlagerverbindung im Regelfall soweit herabgesetzt sind, dass sie allein ein übermäßiges Anziehen nicht sicher zu verhindern vermögen.

In einer alternativen Ausführungsform kann der Gewindeabschnitt 6 als Begrenzung für den Anzug der Spannmutter dienen, indem er mit seiner Stirnseite S an einen Absatz 33, vgl. Figur 1, des Futterkörpers 2 anschlägt.

Idealerweise ist der tiefere Abschnitt 29 der Ausnehmung 27 so gestaltet, dass er den Vorsprung oder die Nase 24 bei vollständig angezogenem Gewindeabschnitt 6 in beide Umfangsrichtungen formschlüssig gefangen hält. Dadurch wird ausgeschlossen, dass sich der Spannring beispielsweise durch bei der Zerspanarbeit mit dem Spannzangenfutter auftretende Vibrationen (etwa durch die schnell wechselnde Anzahl der mit dem zu zerspanenden Werkstück momentan in Eingriff stehenden Werkzeugschneiden) unbeabsichtigt, meist in kleinen Schritten, "kriechend", zu drehen beginnt und sich dadurch womöglich die Kupplung ganz oder teilweise öffnet, was zu Gefahren oder Schäden führen könnte.

Um eine einen Werkzeugschaft gespannt haltende Spannzange zu lösen und das Werkzeug und die Spannzange wechseln zu können, wird wie folgt vorgegangen:
Der Gewindeabschnitt 6 wird losgedreht. Dadurch, dass er über das Wälzlager derart formschlüssig mit dem Spannring verbunden ist, dass er in alle Richtungen parallel zur Längsachse L Kräfte auf den Spannring 5 übertragen kann, drückt er den Spannring 5 von der freien Stirnseite der Hülsenpartie 9 ab.

Der Vorsprung bzw. die Nase 24 des Spannrings wird dabei schließlich so weit aus dem tieferen Abschnitt 29 der Ausnehmung 27 herausgehoben, dass der Spannring 5 nicht länger formschlüssig gegen Verdrehen verriegelt ist. Daraufhin kann der Spannring 5 so gedreht werden, dass sein Vorsprung bzw. seine Nase 24 in den flacheren Abschnitt 28 der Ausnehmung 27 überführt wird, vorzugsweise bis eine Flanke des Vorsprungs bzw. der Nase 24 gegen die Seitenbegrenzung des flacheren Abschnitts 28 der Ausnehmung 27 anschlägt. Das signalisiert und stellt sicher, dass die Kupplung nun vollständig geöffnet ist, weil die Vorsprünge 15a nicht länger in die Vorsprünge 15b eingreifen. Besonders günstig dabei ist, dass die Kupplung vom Bediener von Hand geöffnet und geschlossen werden kann, ohne sich für das Öffnen und Schließen der Kupplung eines Werkzeugs bedienen zu müssen.

Die Spannzange 3 kann nun - umgekehrt, wie oben für deren Einbau beschrieben - durch die zentrale Öffnung des Spannrings 5 aus der Hülsenpartie herausgezogen werden, bis sie völlig ausgebaut und damit frei ist.

Dabei wird vorzugsweise durch einen Anschlag, insbesondere in Gestalt eines Anschlagstifts 30 verhindert, dass der Gewindeabschnitt 6 vollständig von der Hülsenpartie abgeschraubt werden kann. Der Gewindeabschnitt und der Futterkörper sind vorzugsweise nicht werkzeuglos voneinander trennbar, was eine versehentliche Zerlegung und das damit einhergehende, unerwünschte Eindringen von Schmutz verhindert. Anders als bei den vorbekannten Werkzeugen bzw. Spannfuttern kann die Spannzange ohne völliges Abschrauben des Gewindeabschnitts von der Hülsenpartie bzw. vom Futterkörper gewechselt werden.

Der Anschlagstift 30 bewirkt zudem, dass sich die Wälzkörper, wenn die Gewindeverbindung als Wälzkörpergewinde ausgebildet ist, nicht beliebig entlang der Gewinderille verteilen können. Bei jedem Lösen der Spannmutter stauen sich die Wälzkörper am Anschlagstift 30, so dass sie aneinander anliegen und sich beim folgenden Spannvorgang in einer definierten Ausgansposition befinden.

Aus dem vorgehend Geschilderten ergibt sich, dass das erfindungsgemäße Spannfutter in seiner bevorzugten Ausführungsform trotz seiner anspruchsvollen Bauweise sehr sicher bedienbar ist. Auch ein ungeübter Benutzer kann und muss nur von Anschlag zu Anschlag arbeiten. Die richtige Einbaulage aller Teile relativ zueinander und das korrekte Schließen der Kupplung werden stets durch die geschilderten Formschlussteile erzwungen.

### Die Abdichtung

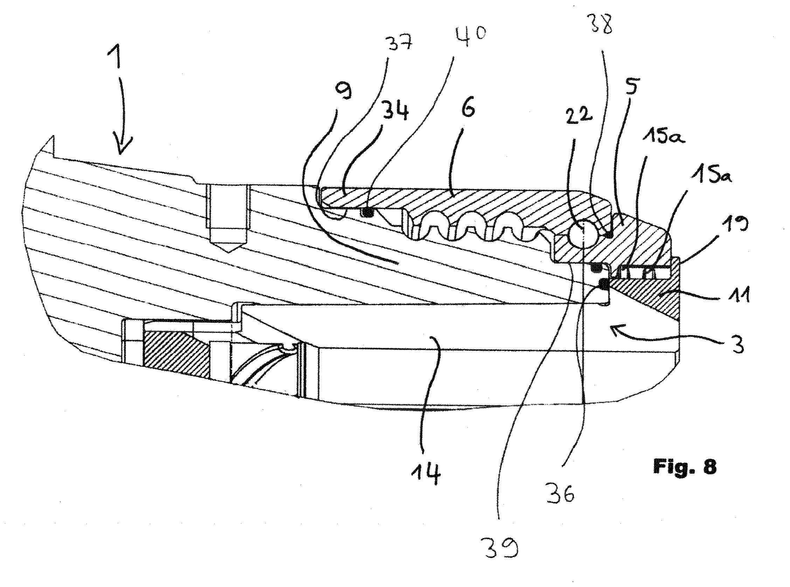

Ein besonders günstiges Ausführungsbeispiel für die Abdichtung des Spannzangenfutters zeigt die Figur 8.

Die Figur 8 zeigt eine Ausschnittvergrößerung durch einen Längsschnitt des Spannzangenfutters. Hier ist einer der Schlitze 14 des Spannzangenfutters angeschnitten. Wie man sieht, erstreckt sich der Schlitz nicht vollständig bis in den Bereich des Kragenabschnitts 11 hinein. Der Kragenabschnitt 11 ist dann zumindest teilweise in Umfangsrichtung in sich geschlossen, insbesondere an seinem Außenumfang, dort, wo die erfindungsgemäße Kupplung ausgeführt ist.

Der in Umfangsrichtung in sich geschlossene Bereich des Kragenabschnitts 11 liegt gegen das freie Stirnende des Futterkörpers 2 an, das die Spannzangenaufnahme 10 berandet. Vorzugsweise ist das freie Stirnende des Futterkörpers 2 mit einer in Umfangsrichtung umlaufenden Nut 36 versehen. In diese ist ein Dichtring eingelegt, beispielsweise eine Schnurdichtung. Auf diese Art und Weise wird verhindert, dass Spanpartikel in den Bereich der Spannzangenaufnahme 10 hineingeraten und dort später Probleme verursachen. Umgekehrt wird immer dann, wenn das Werkzeug durch die Spannzange 3 hindurch mit Kühlschmierstoff versorgt wird, verhindert, dass an dieser Stelle unerwünscht Kühlschmierstoff austritt.

Wie man weiter sieht, hat der Futterkörper 2 im Bereich seines freien Endes vorzugsweise ein Plateau 39mit einem vorzugsweise gleichbleibend verringerten Durchmesser, der im Regelfall den Spannring 5 führt, der ihn mit seiner Innenumfangsfläche übergreift. Das Plateau 39 ist an seiner Außenoberfläche ebenfalls mit einer umlaufenden Nut versehen. In diese ist ein weiterer Dichtring eingelegt, im Regelfall ist das auch hier eine Schnurdichtung. Auf diese Art und Weise wird verhindert, dass kleine Spanpartikel und/oder Kühlflüssigkeit durch den Bereich der Kupplung hindurch bis in den Bereich des Gewindes des Gewindeabschnitts 6 gelangen und dann dort zu Verschleiß führen. Unter einem Plateau versteht man einen Wellenabsatz mit einem über einen gewissen Längsrichtungsbereich hinweg konstanten Durchmesser.

Zu dem gleichen Zweck ist ein weiterer Dichtring 38 zwischen dem Spannring 5 und dem Gewindeabschnitt 6 gefangen. Wie man sieht übergreift der Innenumfang des Gewindeabschnitts 6 den Außenumfang des Spannrings 5, sodass im Überlappungsbereich das bereits beschriebene Wälzlager ausgebildet werden kann, das den Spannring 5 und den Gewindeabschnitt 6 formschlüssig miteinander verbindet. Der besagte Dichtring verhindert, dass durch den Spalt zwischen dem Spannring 5 und dem Gewindeabschnitt 6 Kühlflüssigkeit oder kleine Partikel bis in den Bereich des Wälzlagers gelangen können oder noch darüber hinaus, bis in den Bereich des Gewindes.

Wie man sieht, besitzt der Gewindeabschnitt 6 darüber hinaus auf der dem freien Stirnende des Futterkörpers abgewandten Seite einen zylindrischen Fortsatz, der eine Art Schürze 34 bildet. Der Innenumfang dieser Schürze übergreift ein entsprechendes Plateau 37 des Futterkörpers, das im Regelfall einen konstanten Durchmesser aufweist, genauso wie das Gegenstück am Gewindeabschnitt 6. Hier ist am Futterkörper (gegebenenfalls stattdessen auch im Gewindeabschnitt) ebenfalls eine umlaufende Nut vorgesehen. In diese Nut ist ein Dichtring 40 eingelegt, vorzugsweise auch hier in Gestalt einer Schnurdichtung. Die Schürze 34 ist so gestaltet, dass sie stets mit dem Dichtring in Kontakt ist. Es ist leicht nachvollziehbar, dass dadurch dauerhafte Dichtigkeit hergestellt wird, egal in welcher Verdrehstellung sich der Gewindeabschnitt 6 befindet (Spannzange angezogen oder gelöst).

Aus der Figur 8 gibt sich ohne weiteres, dass die Abdichtung so gestaltet ist, dass das Gewinde zwischen dem Futterkörper und dem Gewindeabschnitt 6 stets abgedichtet ist, auch bei ausgebauter Spannzange. Das ist von erheblichem Vorteil, nicht nur, aber insbesondere auch dann, wenn der Gewindeabschnitt 6 mithilfe von Wälzkörpern auf dem Gegengewinde des Futterkörpers 2 geführt wird.

### Bezugszeichenliste

- 1: Spannzangenfutter
- 2: Futterkörper
- 3: Spannzange
- 4: mehrteilige Spannmutter
- 5: Spannring
- 6: Gewindeabschnitt
- 7: Kupplungsabschnitt zum Ankuppeln des Spannzangenfutters an der Werkzeugmaschine
- 8: Flansch
- 9: Hülsenpartie
- 10: Spannzangenaufnahme
- 11: Kragenabschnitt
- 12: Endabschnitt
- 13: Spannabschnitt
- 14: Schlitz
- 15a: Vorsprünge der Spannzange
- 15b: Vorsprünge des Spannrings
- 16a: Korridor an der Spannzange
- 16b: Korridor am Spannring
- 17: erstes Formschlusselement
- 18: zweites Formschlusselement
- 19: Anschlag
- 20: Innenring eines Wälzlagers
- 21: Außenring eines Wälzlagers
- 22: Wälzkörper
- 23: -
- 24: Nase
- 25: -
- 26: Werkzeugaufnahme
- 27: Ausnehmung
- 28: erster Abschnitt der Ausnehmung
- 29: zweiter Abschnitt der Ausnehmung
- 30: Anschlagstift zur Verhinderung eines völligen Abschraubens der Gewindemutter
- 31: -
- 32: Sperrelement
- 33: Absatz
- 34: Schürze
- 35: -
- 36: Nut am freien Stirnende des Futterkörpers
- 37: Plateau
- 38: weiterer Dichtring, der zwischen dem Spannring 5 und dem Gewindeabschnitt 6 gefangen ist
- 39: Plateau
- 40: Dichtring

- L: Längsachse
- S: Stirnseite

## Patentansprüche

1. Spannzangenfutter (1) zum Einspannen eines Werkzeugschafts, mit einem Futterkörper (2), einer Spannzange (3) und einer mehrteiligen Spannmutter (4), die aus einem Spannring (5) und einem Gewindeabschnitt (6) besteht, die über Wälzkörper (22) drehbar und ansonsten formschlüssig miteinander verbunden sind, **dadurch gekennzeichnet, dass** der Spannring (5) und die Spannzange (3) formschlüssig wirkende Kupplungselemente aufweisen, die so gestaltet sind, dass die Spannzange (3) durch die dem Futterkörper (2) abgewandte Zentralöffnung des auf dem Futterkörper (2) gehaltenen Spannrings (5) hindurch in die Spannzangenaufnahme (10) eingesetzt werden kann, indem sich die Kupplungselemente aneinander vorbei bewegen, und dann die Kupplungselemente durch Verdrehen des Spannrings (5) relativ zur Spannzange (3) miteinander in Eingriff gebracht werden können, so dass der Spannring (5) die ihm vom Gewindeabschnitt (6) beim Anziehen vermittelten Kräfte über die Kupplungselemente auf die Spannzange (3) übertragen und die Spannzange (3) in den Futterkörper (2) eintreiben kann, und dass die Spannzange (3) und der Futterkörper (2) interagierende erste und zweite Formschlusselemente (17; 18) aufweisen, die sicherstellen, dass die Spannzange (3) nur in einer oder mehreren vorgegebenen Verdrehpositionen in den Futterkörper (2) eingesetzt werden kann.

2. Spannzangenfutter (1) nach Anspruch 1, **dadurch gekennzeichnet, dass** die Kupplungselemente so gestaltet sind, dass der Gewindeabschnitt (6) auch bei seinem Lösen über die Kupplungselemente Kräfte auf die Spannzange (3) überträgt, die die Spannzange (3) aus der Spannzangenaufnahme (10) lösen.

3. Spannzangenfutter (1) nach Anspruch 1 oder 2, **dadurch gekennzeichnet, dass** die Kupplungselemente werkzeuglos in und außer Eingriff gebracht werden können, um die Spannzange (3) in den Futterkörper (2) einzubauen oder aus diesem auszubauen.

4. Spannzangenfutter (1) nach einem der vorhergehenden Ansprüche, **dadurch gekennzeichnet, dass** die Kupplungselemente einen Bajonettverschluss bilden.

5. Spannzangenfutter (1) nach einem der vorhergehenden Ansprüche, **dadurch gekennzeichnet, dass** die Kupplungselemente aus mehreren, in Umfangsrichtung jeweils durch einen Korridor (16a; 16b) voneinander getrennten Vorsprüngen (15a; 15b) am Spannring (5) und an der Spannzange (3) bestehen.

6. Spannzangenfutter (1) nach einem der vorhergehenden Ansprüche, **dadurch gekennzeichnet, dass** die Vorsprünge (15a; 15b) als Zähne mit angeschrägten Zahnflanken ausgebildet sind, die vorzugsweise über Kontaktflächen miteinander interagieren, die im Querschnitt einen spitzen Winkel von ≥ 80° gegenüber der Längsachse (L) des Spannzangenfutters (1) einschließen.

7. Spannzangenfutter (1) nach Anspruch 6, **dadurch gekennzeichnet, dass** die Zähne angeschrägte, freie Stirnflächen aufweisen.

8. Spannzangenfutter (1) nach einem der vorhergehenden Ansprüche, **dadurch gekennzeichnet, dass** der Spannring (5) und der Futterkörper (2) zumindest jeweils ein drittes und viertes Formschlusselement aufweisen, die derart interagieren, dass der Spannring (5) die Spannzange (3) nur dann in den Futterkörper (2) eintreiben kann, wenn der Spannring (5) eine bestimmte Position relativ zum Futterkörper (2) und damit auch relativ zur Spannzange (3) einnimmt.

9. Spannzangenfutter (1) nach Anspruch 8, **dadurch gekennzeichnet, dass** die dritten und vierten Formschlusselemente derart gestaltet sind, dass der Spannring (5) bei angezogenem Gewindeabschnitt (6) in und gegen dem Uhrzeigersinn verdrehfest am Futterkörper (2) festgelegt ist.

10. Spannzangenfutter (1) nach Anspruch 9, **dadurch gekennzeichnet, dass** die dritten und vierten Formschlusselemente derart gestaltet sind, dass der Spannring (5) durch das teilweise Lösen des Gewindeabschnitts (6) vom Futterkörper (2) so weit freigegeben wird, das er weit genug gegenüber dem Futterkörper (2) gedreht werden kann, um die Kupplung zu öffnen, so dass die Spannzange (3) über seine Zentralöffnung aus dem Futterkörper (2) entnommen werden kann.

11. Spannzangenfutter (1) nach Anspruch 10, **dadurch gekennzeichnet, dass** die dritten und vierten Formschlusselemente einen ersten und einen zweiten Anschlag bilden, zwischen denen der Spannring (5) bei teilweise gelöstem Gewindeabschnitt (6) hin und her gedreht werden kann, wobei der erste Anschlag die Position des Spannrings (5) festlegt, in der die Kupplungselemente an der Spannzange (3) und dem Spannring (5) vollständig miteinander in Eingriff stehen, so dass die Spannzange (3) in den Futterkörper (2) eingetrieben werden kann, und der zweite Anschlag die Position des Spannrings (5) festlegt, in der die Kupplungselemente vollständig außer Eingriff sind.

12. Spannzange (3) für ein Spannzangenfutter (1) mit einer Außenkonusfläche zum Einführen in den Innenkonus eines Futterkörpers (2) und einem stets über den Futterkörper (2) hinausragenden Kragen, **dadurch gekennzeichnet, dass** die Spannzange (3) an ihrem Kragen mehrere Kupplungselemente trägt, wobei in Umfangsrichtung aufeinanderfolgende Kupplungselemente einen Korridor zwischen sich freilassen, der es entsprechenden Kupplungselementen einer Spannmutter (4) erlaubt, zu passieren und dass die Spannzange (3) ein erstes Formschlusselement (17) zur Interaktion mit einem zweiten Formschlusselement (18) des Futterkörpers (2) aufweist, so dass die Spannzange (3) nur in einer oder mehreren vorgegebenen Verdrehpositionen in den Futterkörper (2) eingesetzt werden kann.

13. Spannmutter (4) für ein eine Spannzange (3) und einen Futterkörper (2) umfassendes Spannzangenfutter (1), wobei die Spannmutter (4) mehrteilig ist und aus einem Spannring (5) und einem Gewindeabschnitt (6) besteht, die über Wälzkörper (22) drehbar und ansonsten formschlüssig miteinander verbunden sind, **dadurch gekennzeichnet, dass** der Spannring (5) ein Kupplungselement aufweist, welches formschlüssig mit einem Kupplungselement der Spannzange (3) wirken kann, und dass die Kupplungselemente so gestaltet sind, dass die Spannzange (3) durch die dem Futterkörper (2) abgewandte Zentralöffnung des auf dem Futterkörper (2) gehaltenen Spannrings (5) hindurch in die Spannzangenaufnahme (10) eingesetzt werden kann, indem sich die Kupplungselemente aneinander vorbei bewegen, und dann die Kupplungselemente durch Verdrehen des Spannrings (5) relativ zur Spannzange (3) miteinander in Eingriff gebracht werden können, so dass der Spannring (5) die ihm vom Gewindeabschnitt (6) beim Anziehen vermittelten Kräfte über die Kupplungselemente auf die Spannzange (3) übertragen und die Spannzange (3) in den Futterkörper (2) eintreiben kann.

## Claims

1. Collet chuck (1) for clamping a tool shank, having a chuck body (2), a collet (3) and a multiple-part clamping nut (4) which is composed of a clamping ring (5) and a threaded portion (6) that are connected to one another in a rotatable and otherwise form-fitting manner by way of rolling members (22), **characterized in that** the clamping ring (5) and the collet (3) have coupling elements which act in a form-fitting manner and are designed such that the collet (3), through the central opening of the clamping ring (5) held on the chuck body (2), said central opening facing away from the latter, can be inserted into the collet receptacle (10) **in that** coupling elements move past one another and the coupling elements thereupon, by twisting the clamping ring (5) relative to the collet (3), can be brought to mutually engage such that the clamping ring (5), by way of the coupling elements, can transmit the forces, which have been imparted to said clamping ring (5) by the threaded portion (6) during tightening, to the collet (3) and drive the collet (3) into the chuck body (2), and **in that** the collet (3) and the chuck body (2) have interacting first and second form-fitting elements (17; 18) which ensure that the collet (3) can be inserted into the chuck body (2) only in one or a plurality of pre-defined twisted positions.

2. Collet chuck (1) according to Claim 1, **characterized in that** the coupling elements are designed such that the threaded portion (6), even when the latter is loosened, by way of the coupling elements transmits forces to the collet (3), said forces releasing the collet (3) from the collet receptacle (10).

3. Collet chuck (1) according to Claim 1 or 2, **characterized in that** the coupling elements can be brought to engage and disengage without tools in order for the collet (3) to be installed in the chuck body (2) or to be uninstalled from the latter.

4. Collet chuck (1) according to one of the preceding claims, **characterized in that** the coupling elements form a bayonet lock.

5. Collet chuck (1) according to one of the preceding claims, **characterized in that** coupling elements are composed of a plurality of protrusions (15a; 15b) which in the circumferential direction on the clamping ring (5) and on the collet (3) are in each case mutually separated by a corridor (16a; 16b).

6. Collet chuck (1) according to one of the preceding claims, **characterized in that** the protrusions (15a; 15b) are configured as teeth which have bevelled tooth flanks, preferably mutually interact by way of contact faces, and in the cross section enclose an acute angle of ≥ 80° in relation to the longitudinal axis (L) of the collet chuck (1).

7. Collet chuck (1) according to Claim 6, **characterized in that** the teeth have bevelled free end faces.

8. Collet chuck (1) according to one of the preceding claims, **characterized in that** the clamping ring (5) and the chuck body (2) have in each case at least one third and fourth form-fitting element, said form-fitting elements interacting in such a manner that the clamping ring (5) can drive the collet (3) into the chuck body (2) only when the clamping ring (5) assumes a specific position relative to the chuck body (2) and thus also relative to the collet (3) .

9. Collet chuck (1) according to Claim 8, **characterized in that** the third and fourth form-fitting elements are designed in such a manner that the clamping ring (5), in the case of a tightened threaded portion (6), is established on the chuck body (2) so as to be secured in relation to twisting in the clockwise and anti-clockwise direction.

10. Collet chuck (1) according to Claim 9, **characterized in that** the third and fourth form-fitting elements are designed in such a manner that the clamping ring (5), by partially loosening the threaded portion (6), is released from the chuck body (2) to the extent that said clamping ring (5) can be sufficiently rotated in relation to the chuck body (2) so as to open the coupling such that the collet (3), by way of the central opening of said clamping ring (5), can be retrieved from the chuck body (2).

11. Collet chuck (1) according to Claim 10, **characterized in that** the third and fourth form-fitting elements form a first and a second detent, the clamping ring (5) in the case of a partially loosened thread portion (6), being able to be rotated back and forth between said first and said second detent, wherein the first detent establishes the position of the clamping ring (5) in which the coupling elements on the collet (3) and the clamping ring (5) fully engage with one another such that the collet (3) can be driven into the chuck body (2), and the second detent establishes the position of the clamping ring (5) in which the coupling elements are fully disengaged.

12. Collet (3) for a collet chuck (1), having an external conical face for introducing into the internal cone of a chuck body (2), and a collar that always protrudes beyond the chuck body (2), **characterized in that** the collet (3) on the collar thereof supports a plurality of coupling elements, wherein successive coupling elements in the circumferential direction therebetween leave vacant a corridor which permits corresponding coupling elements of a clamping nut (4) to pass through, and **in that** the collet (3) has a first form-fitting element (17) for interacting with a second form-fitting element (18) of the chuck body (2) such that the collet (3) can be inserted into the chuck body (2) only in one or a plurality of pre-defined twisted positions.

13. Clamping nut (4) for a collet chuck (1) comprising a collet (3) and a chuck body (2), wherein the clamping nut (4) is in multiple parts and is composed of a clamping ring (5) and a threaded portion (6) that are connected to one another in a rotatable and otherwise form-fitting manner by way of rolling members (22), **characterized in that** the clamping ring (5) has a coupling element which conjointly with a coupling element of the collet (3) can act in a form-fitting manner, and **in that** the coupling elements are designed such that the collet (3), through the central opening of the clamping ring (5) held on the chuck body (2), said central opening facing away from the latter, can be inserted into the collet receptacle (10) **in that** coupling elements move past one another and the coupling elements thereupon, by twisting the clamping ring (5) relative to the collet (3), can be brought to mutually engage such that the clamping ring (5) by way of the coupling elements can transmit the forces, which have been imparted to said clamping ring (5) by the threaded portion (6) during tightening, to the collet (3) and drive the collet (3) into the chuck body (2).

## Revendications

1. Mandrin à pince de serrage (1) destiné à serrer une tige d'outil, ledit mandrin comprenant un corps de mandrin (2), une pince de serrage (3) et un écrou de serrage (4) en plusieurs parties qui comprend une bague de serrage (5) et une portion filetée (6) qui sont reliées entre elles de manière rotative par le biais d'éléments roulants (22) et sinon par complémentarité de formes, **caractérisé en ce que** la bague de serrage (5) et la pince de serrage (3) comportent des éléments d'accouplement qui agissent par complémentarité de formes et qui sont conçus de telle sorte que la pince de serrage (3) puisse être insérée dans le logement de pince de serrage (10) par l'ouverture centrale, située à l'opposé du corps de mandrin (2), de la bague de serrage (5) maintenue sur le corps de mandrin (2) du fait que les éléments d'accouplement se déplacent les uns à côté des autres puis les éléments d'accouplement peuvent être engagés les uns avec les autres par rotation de la bague de serrage (5) par rapport à la pince de serrage (3) de sorte que la bague de serrage (5) puisse transférer les forces, qui lui sont communiquées par la portion filetée (6) lors du serrage, à la pince de serrage (3) par le biais des éléments d'accouplement et puisse enfoncer la pince de serrage (3) dans le corps de mandrin (2), et **en ce que** la pince de serrage (3) et le corps de mandrin (2) comportent des premier et deuxième éléments de liaison par complémentarité de formes (17 ; 18) qui interagissent entre eux et qui garantissent que la pince de serrage (3) ne peut être insérée dans le corps de mandrin (2) que dans une ou plusieurs positions en rotation spécifiées.

2. Mandrin à pince de serrage (1) selon la revendication 1, **caractérisé en ce que** les éléments d'accouplement sont conçus de telle sorte que la portion filetée (6) transmet, même lorsqu'elle est desserrée, à la pince de serrage (3) par le biais des éléments d'accouplement des forces qui détachent la pince de serrage (3) du logement de pince de serrage (10).

3. Mandrin à pince de serrage (1) selon la revendication 1 ou 2, **caractérisé en ce que** les éléments d'accouplement peuvent être engagés et désengagés sans outils afin de monter la pince de serrage (3) dans le corps de mandrin (2) ou de la démonter de celui-ci.

4. Mandrin à pince de serrage (1) selon l'une des revendications précédentes, **caractérisé en ce que** les éléments d'accouplement forment une fermeture à baïonnette.

5. Mandrin à pince de serrage (1) selon l'une des revendications précédentes, **caractérisé en ce que** les éléments d'accouplement comprennent sur la bague de serrage (5) et sur la pince (3) une pluralité de saillies (15a ; 15b) qui sont séparées les unes des autres dans la direction périphérique à chaque fois par un dégagement (16a ; 16b).

6. Mandrin à pince de serrage (1) selon l'une des revendications précédentes, **caractérisé en ce que** les saillies (15a ; 15b) sont réalisées sous la forme de dents qui sont pourvues de flancs biseautés et qui interagissent entre elles de préférence par des surfaces de contact qui forment en coupe transversale un angle aigu de ≥ 80° par rapport à l'axe longitudinal (L) du mandrin à pince de serrage (1).

7. Mandrin à pince de serrage (1) selon la revendication 6, **caractérisé en ce que** les dents comportent des surfaces frontales libres biseautées.

8. Mandrin à pince de serrage (1) selon l'une des revendications précédentes, **caractérisé en ce que** la bague de serrage (5) et le corps de mandrin (2) comportent chacun au moins un troisième et un quatrième élément de liaison par complémentarité de formes qui coopèrent de manière à ce que la bague de serrage (5) ne puisse enfoncer la pince de serrage (3) dans le corps de mandrin (2) que lorsque la bague de serrage (5) se trouve à une position déterminée par rapport au corps de mandrin (2) et donc également par rapport à la pince de serrage (3).

9. Mandrin à pince de serrage (1) selon la revendication 8, **caractérisé en ce que** les troisième et quatrième éléments de liaison par complémentarité de formes sont conçus de manière à ce que la bague de serrage (5) soit immobilisée en rotation sur le corps de mandrin (2) dans le sens horaire et dans le sens antihoraire lorsque la portion filetée (6) est serrée.

10. Mandrin à pince de serrage (1) selon la revendication 9, **caractérisé en ce que** les troisième et quatrième éléments de liaison par complémentarité de formes sont conçus de manière à ce que la bague de serrage (5) soit libérée du corps de mandrin (2) par le desserrage partiel de la portion filetée (6) dans une mesure telle qu'elle peut être suffisamment tournée par rapport au corps de mandrin (2) pour ouvrir l'accouplement de sorte que la pince de serrage (3) puisse être retirée du corps de mandrin (2) par son ouverture centrale.

11. Mandrin à pince de serrage (1) selon la revendication 10, **caractérisé en ce que** les troisième et quatrième éléments de liaison par complémentarité de formes forment des première et deuxième butées entre lesquelles la bague de serrage (5) peut être tournée suivant un mouvement alternatif lorsque la portion filetée (6) est partiellement desserrée, la première butée définissant la position de la bague de serrage (5) dans laquelle les éléments d'accouplement sur la pince de serrage (3) et la bague de serrage (5) sont entièrement engagés les uns avec les autres de sorte que la pince de serrage (3) peut être enfoncée dans le corps de mandrin (2), et la deuxième butée définissant la position de la bague de serrage (5) dans laquelle les éléments d'accouplement sont complètement désengagés.

12. Pince de serrage (3) destinée à un mandrin à pince de serrage (1) et pourvue d'une surface conique extérieure destinée à l'insertion dans le cône intérieur d'un corps de mandrin (2) et d'une collerette qui dépasse toujours du corps de mandrin (2), **caractérisée en ce que** la pince (3) porte plusieurs éléments d'accouplement sur sa collerette, des éléments d'accouplement successifs dans la direction circonférentielle ménageant entre eux un dégagement qui permet le passage d'éléments d'accouplement correspondants d'un écrou de serrage (4), et **en ce que** la pince de serrage (3) comporte un premier élément de liaison par complémentarité de formes (17) destiné à l'interaction avec un deuxième élément de liaison par complémentarité de formes (18) du corps de mandrin (2) de sorte que la pince de serrage (3) ne peut être insérée dans le corps de mandrin (2) que dans une ou plusieurs positions en rotation spécifiées.

13. Écrou de serrage (4) destiné à un mandrin à pince de serrage (1) comprenant une pince de serrage (3) et un corps de mandrin (2),
l'écrou de serrage (4) étant en plusieurs parties et comprenant une bague de serrage (5) et une portion filetée (6) qui sont reliées entre elles de manière rotative par le biais d'éléments roulants (22) et sinon par complémentarité de formes, **caractérisé en ce que** la bague de serrage (5) comporte un élément d'accouplement qui peut agir par complémentarité de formes avec un élément d'accouplement de la pince de serrage (3), et **en ce que** les éléments d'accouplement sont conçus de telle sorte que la pince de serrage (3) puisse être insérée dans le logement de pince de serrage (10) par l'ouverture centrale, située à l'opposé du corps de mandrin (2), de la bague de serrage (5) maintenue sur le corps de mandrin (2) du fait que les éléments d'accouplement se déplacent les uns à côté des autres puis les éléments d'accouplement peuvent être engagés les uns avec les autres par rotation de la bague de serrage (5) par rapport à la pince de serrage (3) de sorte que la bague de serrage (5) puisse transférer les forces, qui lui sont communiquées par la portion filetée (6) lors du serrage, à la pince de serrage (3) par le biais des éléments d'accouplement et puisse enfoncer la pince de serrage (3) dans le corps de mandrin (2).
